(19) Europäisches Patentamt
European Patent Office
Office européen des brevets

(11) EP 3 016 072 A1

(12) EUROPEAN PATENT APPLICATION

(43) Date of publication:
04.05.2016 Bulletin 2016/18

(51) Int Cl.:
$G06T\ 7/20$ $^{(2006.01)}$

(21) Application number: 14306743.7

(22) Date of filing: 30.10.2014

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME

(71) Applicant: Thomson Licensing
92130 Issy-les-Moulineaux (FR)

(72) Inventors:
• Crivelli, Tomas Enrique
35576 Cesson-Sévigné (FR)

• Robert, Philippe
35576 Cesson-Sévigné (FR)
• Fradet, Matthieu
35576 Cesson-Sévigné (FR)
• Perez, Patrick
35576 Cesson-Sévigné (FR)

(74) Representative: Huchet, Anne
Technicolor
1, rue Jeanne d'Arc
92443 Issy-les-Moulineaux Cedex (FR)

(54) **A method for estimating a function of the positions of a set of pixels in a reference frame, from an initial frame, and corresponding device, computer program product and computer-readable medium**

(57) The disclosure relates to a method for estimating, for a set of pixels defined in an initial frame $I_0$, a function of the positions of the set of pixels in a reference frame $I_n$.

According to the disclosure, said method comprises at least one iteration of the following steps, for a current frame of the sequence:

- obtaining (41) a matrix $\mathbf{P}_{k,k+1}$ representing, for each pixel of a previous frame $I_k$, a probability of the pixel to be at different positions in the current frame $I_{k+1}$, the previous frame $I_k$ preceding the current frame $I_{k+1}$ in the sequence;

- determining (42) a vector $\hat{E}_{k,n}$ of function of positions of the set of pixels in the previous frame $I_k$, by multiplying said matrix $\mathbf{P}_{k,k+1}$ with a vector $\hat{E}_{k+1,n}$ of function of positions of the set of pixels in the current frame $I_{k+1}$;

- considering the previous frame as the current frame for the next iteration, if any;

wherein, for the first iteration, the current frame is the reference frame $I_n$ and the previous frame is a frame preceding the reference frame $I_n$ in the sequence;

and wherein said matrix is determined by using information from at least one of a system model between the previous frame and the current frame, and of observations of the function of positions of the set of pixels in at least the current frame.

Fig. 4

**Description**

**1. Technical field**

The present disclosure relates to the simultaneous processing of pixels, and especially to the tracking of pixels in a sequence of frames, like a video sequence.
More specifically, the present disclosure offers a technique for estimating, for a set of pixels defined in an initial image or frame, a function of the positions of the set of pixels in a reference image or frame, arbitrarily distant in time from the initial frame in a sequence of frames.
In particular, the present disclosure aims at determining, for each point or pixel of the initial frame, its position in the reference frame. Such estimation could be done in a dense way, that is for all the pixels of the initial frame at the same time.
A first application is the propagation of information defined at the pixel level in the reference frame, to the initial frame, among which: inserted graphic elements, a segmentation mask, a disparity or depth field, any particular pixel-wise modification of the reference frame, etc.
A second application is dense point tracking. If the initial frame is fixed and the reference frame is advanced across the video, an estimation of a function of the position of every pixel defined in the initial frame, in all the following frames in the video, also known as the trajectory of the pixel, could be obtained. Such estimation could thus be used to estimate the motion vectors of the pixels of each frame of a video sequence, to estimate the trajectories of the pixels of the initial frame up to the reference frame, etc.

**2. Background art**

This section is intended to introduce the reader to various aspects of art, which may be related to various aspects of the present disclosure that are described and/or claimed below. This discussion is believed to be helpful in providing the reader with background information to facilitate a better understanding of the various aspects of the present disclosure. Accordingly, it should be understood that these statements are to be read in this light, and not as admissions of prior art.

*2.1 Trucking*

Interesting visual elements to track, that is, to locate at each time instant within a video sequence, go from meaningful large regions, to semantic content, to scene objects, to individual image points or pixels. While at the object level or above, the number of possible tracked entities (object, regions) remain limited, it explodes when the requirement is to perform a dense track of all the image points, which can be in the order of hundreds of thousands and even millions of elements.

*2.2 Dense tracking solutions*

Existing solutions to the problem of dense point tracking or correspondence estimation exploit motion (optical flow) estimation methods between consecutive frames and, by an integration of velocity vectors, benefit from the full density of such vector fields in order to construct a dense trajectory field.
Such technique is for example disclosed by N. Sundaram et al. in "Dense point trajectories by GPU-accelerated large displacement optical flow", Proc. of ECCV, 2010. An advantage of this technique is that optical flow is easy to obtain and dense flow integration has a relatively low complexity. A disadvantage is that its precision degrades rapidly with the number of frames, and trajectories of no more than 30 frames can be obtained accurately.
Better precision can be obtained by sparse feature point detection and tracking methods, such as the KLT tracker, as disclosed by J. Shi et al. in "Good features to track", Proc. CVPR, 1994, and its descendants. However, better precision is obtained only for pixels that carry meaningful information (like borders, edges, highly textured areas). The performance of these trackers in the dense case where the majority of the points belong to uniform areas is very poor, due to the lack of a collective tracking.

*2.3 Theory of optimal tracking*

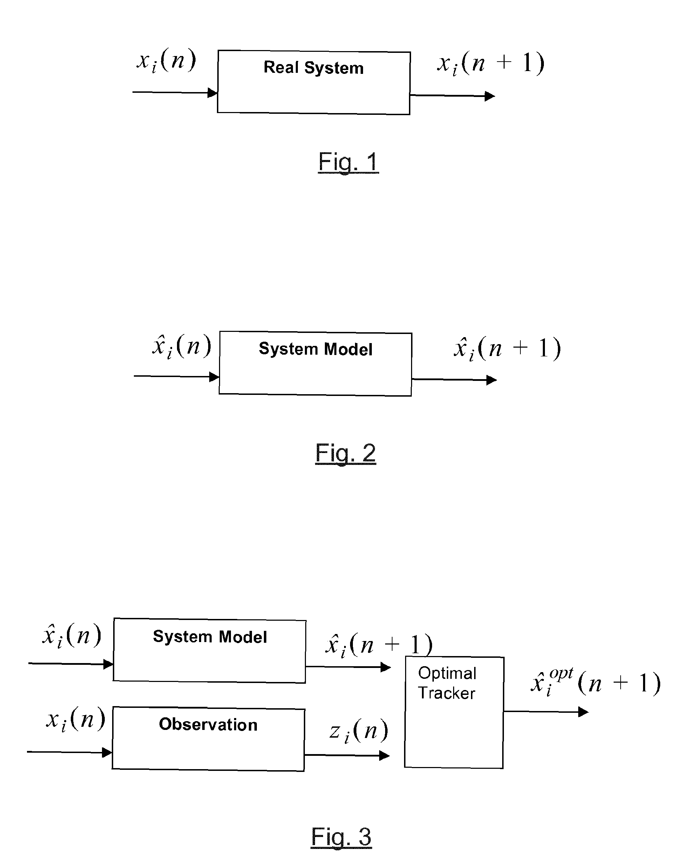

The theory of optimal tracking is known since several years and it has been successfully applied to visual tracking problems.
Let us first describe the problem of target tracking in general terms in order to identify the components of a tracking system. We start from the unknown quantity we want to estimate. In this case, let's consider the position of a pixel along the image sequence. We can assume that the entity to track (a given pixel) is a system with a certain dynamic, which may simply be its velocity at a given time instant n, or the displacement between two frames. In any case, it can be thought as a dynamical real system that evolves in time, as illustrated in **Figure 1.**

A first attempt to estimate the unknown quantity (the position of the pixel) is to model the real system by as system model, as illustrated in **Figure 2,** and to simulate its behavior.

If the real system was perfectly modeled, without uncertainties, errors or the least approximation, one can expect that the real and the modeled system behave exactly the same (i.e. $x_i(n) = \hat{x}_i(n)$). In the case of pixel tracking, for the same starting pixel, the position would be known for every time instant. For example, if we are able to know the exact velocity of the pixel at each frame, then we can predict its positions without error.

Dense point tracking methods that are based on optical flow accumulation implicitly consider this scheme: the estimated motion field is the system model, and it is evaluated at the current position estimation $\hat{x}_i(n)$ to obtain the prediction $\hat{x}_i(n + 1)$. However, these open-loop models sooner or later diverge from the real system and they are unlikely to recover the track.

Within real tracking systems, an additional process could be attached: the observation process.

In this case, the true unknown quantity is directly or indirectly observed as a measurement. For example, the target position, in this case the pixel, may be determined by detection, that is, by observing some characteristic of the point and searching the best matching location in subsequent frames. However, observations are not limited to the quantity to estimate, but to any function of it (e.g. color or other pixel features) that give information on the most probable target location. Nevertheless, ambiguities, noise and uncertainties make these observations prone to mismatches.

The goal of tracking methods based on the theory of optimal filtering, as those based on optimal Bayes decision theory, is to optimally combine the system model or dynamics and the observation process in order to generate an estimation following a given criteria, as illustrated in **Figure 3.** Examples of such approaches are those based on Kalman filters, particle filters and Montecarlo sampling methods, hidden Markov models etc.

For one tracked target (e.g. one pixel) very efficient solvers exist for such a system.

This can be achieved, by implementing, for example:

- open-loop schemes where there is no observation process and the problem reduces to solving the system model evolution. This is the case of simple direct integration of target (pixel) velocity.
- linear system models along with linear observation processes, for which several simple Kalman filters could be applied to estimate the position of each pixel. However, this is a very strong hypothesis that particularly limits the nature of measurements that can be exploited.

However, when dealing with the dense point tracking problem, replicating this scheme a hundred of thousands of times becomes prohibitive.

Application of the theory of optimal tracking is thus limited to optimally track a few entities such as objects, or at most a few points.

The present disclosure overcomes at least one of the above-mentioned shortcomings.

### 3. Summary

The present disclosure relates to a method for estimating, for a set of pixels defined in an initial frame $I_0$, a function of the positions of the set of pixels in a reference frame $I_n$, the initial frame $I_0$ and the reference frame $I_n$ belonging to a sequence of successive frames.

According to the disclosure, said method comprises at least one iteration of the following steps, for a current frame of the sequence:

- obtaining a matrix $\mathbf{P}_{k,k+1}$ representing, for each pixel of a previous frame $I_k$, a probability of the pixel to be at different positions in the current frame $I_{k+1}$, the previous frame $I_k$ preceding the current frame $I_{k+1}$ in the sequence;
- determining a vector $\hat{\mathbf{E}}_{k,n}$ of function of positions of the set of pixels in the previous frame $I_k$, by multiplying said matrix $\mathbf{P}_{k,k+1}$ with a vector $\hat{E}_{k+1,n}$ of function of positions of the set of pixels in the current frame $I_{k+1}$;
- considering the previous frame as the current frame for the next iteration, if any;

wherein, for the first iteration, the current frame is the reference frame $I_n$ and the previous frame is a frame preceding the reference frame $I_n$ in the sequence;

and wherein the matrix is determined by using information from at least one of a system model between the previous frame and the current frame and of observations of the function of positions of the set of pixels in at least the current frame.

The present disclosure thus proposes a new technique for estimating efficiently, in a reference frame, a function of the positions of a set of pixels initially defined in an initial frame.

Such a function of the position is for example:

- the identity function, delivering a spatial location of each pixel of the set of pixels in the reference frame,
- a color function, delivering a color of each pixel of the set of pixels in the reference frame,
- a velocity function, delivering a velocity of each pixel of the set of pixels in the reference frame,
- a texture function, delivering a texture of each pixel of the set of pixels in the reference frame,
- or any function related to any property of the pixels that depend on their positions.

It is thus possible to determine, in a dense way, a function of the set of pixels in the reference frame. In other words, the function of the positions could be estimated at the same time for all the pixels of the set of pixels defined in the initial frame.

The disclosure is thus well suited for dense pixel tracking.

In particular, such algorithm implements a backward recursion, since for the first iteration, the current frame is the reference frame, and for the following iterations, the current frame is a frame preceding the reference frame in the sequence of frames.

The disclosure is thus also efficient for propagating any type of information defined at the pixel level in the reference frame, to the initial frame.

For example, the set of pixels in the initial frame comprises all the pixels of the initial frame.

The present disclosure thus aims at determining, for each pixel of the initial frame, its position, or a function of its position, in the reference frame.

In particular, the initial frame $I_0$ and the reference frame In are separated by at least one frame in the sequence of successive frames.

At least one embodiment thus discloses an efficient algorithm that implements an optimal tracking filter for the totality of the points or pixels of an image or any smaller subset of pixels.

According to an embodiment of the disclosure, the system model belongs to the group comprising:

- an estimation of a motion field between the previous frame and the current frame,
- a constant velocity model,
- a constant acceleration model,
- a physic-related motion model,
- any previously defined model.

In other words, the system model could either be estimated, like a motion field between the previous frame and the current frame, or previously known, like a constant velocity model, a constant acceleration model, a physic-related motion model, with dynamics governed by a physic equation, like fluids mechanics. Such system model could be defined by analyzing the sequence of frames.

In particular, said method comprises determining a probability model of the function of positions of the set of pixels from the observations.

The observations could be directly the function of positions, or something else related. Such observations, also called measurements, are then translated into probabilities and used to determine the matrix. They could be measured in the current image $I_{k+1}$, and are denoted $z_{k+1}$. Once translated, they could represent a probability of the function of positions of the set of pixels in the previous frame knowing the function of positions of the set of pixels in the current frame. The observations add some information to get a more accurate estimation.

According to at least one embodiment, the first iteration comprises initializing a vector of function of positions of the set of pixels in the reference frame according to the positions of the set of pixels in the reference frame grid.

Such initialization aims at defining a vector $\hat{E}_{n,n}$ of function of positions of the set of pixels in the reference frame $I_n$.

In particular, the method comprises storing the vector $\hat{E}_{k,n}$ of function of positions of the set of pixels in the previous frame, once determined.

Each output $\hat{E}_{k,n}$ for $k:n - 1, ... , 0$ can thus be stored as a dense motion field or correspondence field that assigns each pixel of the set of pixels in an image $I_k$ its location in the reference frame $I_n$.

According to another embodiment, the method comprises estimating trajectories of each pixel of the set of pixels between the initial frame $I_0$ and a target frame $I_N$, by implementing the iterations previously defined for different reference frames $I_n$, with $1 \le n \le N$.

In other word, there are two iterative algorithms, one running on the current frame $I_k$, with $k$ varying from $n - 1$ to 0, and one running on the reference frame $I_n$, with $n$ varying from 1 to N.

According to a specific feature, the matrix $\mathbf{P}_{k,k+1}$ is a sparse right stochastic matrix.

Due to the implementation of a backward recursion according to the disclosure, such matrix comprises mainly coefficients equal to zero.

The computations are therefore simplified and faster.

Moreover, the use of sparse matrix is more efficient in term of storage.

In particular, the matrix $\mathbf{P}_{k,k+1}$ is defined by:

$$\left[\mathbf{P}_{k,k+1}\right]_{ij} = h_{k,k+1}^{i}(p_j, q_j)$$

with :

- $h_{k,k+1}^{i}(p_j, q_j) \propto p_{k+1|k}\left((p_j, q_j)\big|(p_i, q_i)\right) p_{z|x}\left(\mathbf{z}_i(k+1)\big|(p_j, q_j)\right),$
- $(p_j, q_j)$ a possible position, in the current frame $I_{k+1}$, of a pixel $\mathbf{x}_i(k)$ of the set of pixels belonging to the previous frame $I_k$,
- $\mathbf{z}_i(k+1)$ an observation, in the current frame $I_{k+1}$, of the function of the pixel $x_i(k+1)$ of the set of pixels belonging to the current frame $I_{k+1}$.

For example, the first row of the matrix is related to the first pixel of the previous frame $I_k$:

- the first element of the matrix (first row, first column) defines the probability of the first pixel of the previous frame $I_k$ to be at the first position in the current frame $I_{k+1}$,
- the second element of the matrix (first row, second column) defines the probability of the first pixel of the previous frame $I_k$ to be at the second position in the current frame $I_{k+1}$,
- the third element of the matrix (first row, third column) defines the probability of the first pixel of the previous frame $I_k$ to be at the third position in the current frame $I_{k+1}$,
- etc.

In the same way, the second row of the matrix is related to the second pixel of the previous frame $I_k$, the third row of the matrix is related to the third pixel of the previous frame $I_k$, etc.

In particular, the matrix $\mathbf{P}_{k,k+1}$ could be a square matrix or a non-square matrix, for example if the number of pixels in the previous frame $I_k$ is less than the number of positions in the current frame $I_{k+1}$.

According to an embodiment, the vector of function of positions of the set of pixels in the previous frame $\hat{E}_{k,n}$ is determined by multiplying said matrix $\mathbf{P}_{k,k+1}$ with the vector of function of positions of the set of pixels in the current frame $\hat{E}_{k+1,n}$ such as:

$$\hat{E}_{k,n} = \mathbf{P}_{k,k+1}\hat{E}_{k+1,n}$$

with:

$$\hat{E}_{k+1,n}$$
$$= \left[E[f(\mathbf{x}_0(n))|\mathbf{x}_0(k+1) = (p_0, q_0), \mathbf{z}_0(k+2:n)], \dots, E[f(\mathbf{x}_P(n))|\mathbf{x}_P(k+1) = (p_P, q_P), \mathbf{z}_P(k+2:n)]\right]^{\mathrm{T}}$$

with:

$$E\left[f(\mathbf{x}_i(n))\big|\mathbf{x}_i(k), \mathbf{z}_i(k+1:n)\right] = \int p\left(f(\mathbf{x}_i(n))\big|\mathbf{x}_i(k), \mathbf{z}_i(k+1:n)\right) f(\mathbf{x}_i(n))dx_i(n)$$

$f(\mathbf{x}_i(n))$ the function of the position of the pixel $\mathbf{x}_i(n)$ of the set of pixels in the previous frame $I_k$.

Such a product could be performed row by row, only for the non-zero coefficients of the matrix. There is therefore no need to apply the whole matrix-vector product, which simplifies the computations.

The present disclosure also concerns a device for estimating, for a set of pixels defined in an initial frame $I_0$, a function of the positions of the set of pixels in a reference frame $I_n$, the initial frame $I_0$ and the reference frame In belonging to a sequence of at least two successive frames,

According to an embodiment of the disclosure, such device comprises the following modules, activated in at least one iteration, for a current frame of the sequence:

- a module for obtaining a matrix $\mathbf{P}_{k,k+1}$ representing, for each pixel of a previous frame $I_k$, a probability of the pixel to be at different positions in the current frame $I_{k+1}$, the previous frame $I_k$ preceding the current frame $I_{k+1}$ in the sequence;
- a module for determining a vector $\hat{E}_{k,n}$ of function of positions of the set of pixels in the previous frame $I_k$, by multiplying said matrix $\mathbf{P}_{k,k+1}$ with a vector $\hat{E}_{k+1,n}$ of function of positions of the set of pixels in the current frame $I_{k+1}$;
- the previous frame being considered as the current frame for the next iteration, if any;

wherein, for the first iteration, the current frame is the reference frame In and the previous frame is a frame preceding the reference frame In in the sequence;

and wherein said matrix is determined by using information from at least one of a system model between the previous frame and the current frame, and of observations of the function of positions of the set of pixels in at least the current frame.

Such a device can be especially adapted to implement the estimating method described here above. It could of course comprise the different characteristics pertaining to the estimating method according to an embodiment of the disclosure, which can be combined or taken separately. Thus, the characteristics and advantages of the device are the same as those of the estimating method and are not described in more ample detail.

Another aspect of the disclosure pertains to a computer program product downloadable from a communication network and/or recorded on a medium readable by computer and/or executable by a processor comprising software code adapted to perform a method for estimating, for a set of pixels defined in an initial frame $I_0$, a function of the positions of the set of pixels in a reference frame $I_n$, wherein the software code is adapted to perform the steps of the estimating method described above.

In addition, the present disclosure concerns a non-transitory computer readable medium comprising a computer program product recorded thereon and capable of being run by a processor, including program code instructions for implementing the steps of the estimating method previously described.

Certain aspects commensurate in scope with the disclosed embodiments are set forth below. It should be understood that these aspects are presented merely to provide the reader with a brief summary of certain forms the disclosure might take and that these aspects are not intended to limit the scope of the disclosure. Indeed, the disclosure may encompass a variety of aspects that may not be set forth below.

## 4. Brief description of the drawings

The disclosure will be better understood and illustrated by means of the following embodiment and execution examples, in no way limitative, with reference to the appended figures on which:

- Figures 1 to 3, discussed in prior art, illustrate respectively a real system, a system model and a combination of a model system and of observations;
- Figure 4 is a flow chart illustrating the main steps of a method for estimating a function of positions of pixels according to the disclosure;
- Figure 5 illustrate an example of algorithm for estimating the position, in a reference frame, of every pixel of a set of pixels initially defined in an initial frame;
- Figures 6 and 7 illustrate different applications of the invention according to different embodiments;
- Figure 8 is a block diagram of an example of a device implementing the method for estimating a function of positions of pixels according to the example of Figure 4.

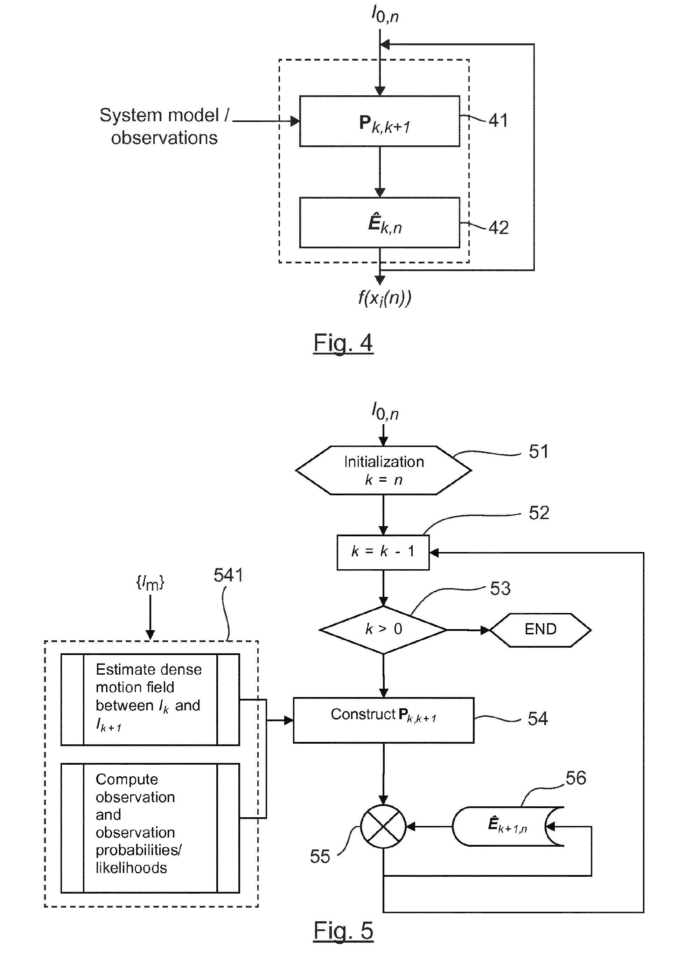

In Figures 4, 5 and 8, the represented blocks are purely functional entities, which do not necessarily correspond to physically separate entities. Namely, they could be developed in the form of software, hardware, or be implemented in one or several integrated circuits, comprising one or more processors.

Wherever possible, the same reference numerals will be used throughout the figures to refer to the same or like parts.

## 5. Description of embodiments

It is to be understood that the figures and descriptions of the present disclosure have been simplified to illustrate elements that are relevant for a clear understanding of the present disclosure, while eliminating, for purposes of clarity, many other elements found in typical display devices.

*5.1 Optimal tracking problem from a Bayesian point of view*

Let's consider a sequence of images $I_m$, represented as a multi-channel matrix in any color space, with instants m: 0 ... N. We denote the complete sequence as $\{I_m\}$.

All P pixels of an initial image $I_0$ are indexed with index $i$: 0 ... P - 1 (e.g. sweeping the image by columns or rows). We denote $x_i(n) = (x_i(n), y_i(n))$ the 2D position at instant $n$ of the $i$ - $th$ pixel or point of the initial image $I_0$. The objective is the following: for every pixel with initial position $x_i(0) = (x_i(0), y_i(0))$, estimate its position $x_i(n)$, in at least one reference frame $In$ for $n$:1 ... N.

Let $z_i(n)$ be a noisy measured function of the position $x_i(n)$. We want to obtain filtered estimates of $x_i(n)$, exploiting all the available measurements $\mathbf{z}_i(1)$, $\mathbf{z}_i(2)$, $\mathbf{z}_i(3)$ ... $z_i(n) \equiv z_i(1: n)$.

From the perspective of the Bayesian estimation framework, such a problem is completely solved if we are able to construct the a-posteriori probability density function $p(x_i(n)|z_i(1:n))$. An optimal estimate, with regard to virtually any criterion, can be obtained from this probability density function, which contains all the available information to predict $x_i(n)$.

In this context, the problem of sequential filtering involves two stages: prediction and update of this probability density function.

First, suppose $p(x_i(n - 1)|z_i(1: n - 1))$ is known, we can obtain the prior probability density function at instant $n$ from the Chapman - Kolmogorov equation:

$$\text{(prediction)} \quad p\big(x_i(n)\big|\mathbf{z}_i(1:n-1)\big)$$
$$= \int p(x_i(n)|x_i(n-1)) \, p(x_i(n-1)|\mathbf{z}_i(1:n-1)dx_i(n-1) \tag{1}$$

which accounts for a simple marginalization.

A standard assumption is that $x_i(n)$ is a Markov process, i.e. one puts $p(x_i(n)|x_i(n - 1), z_i(1: n - 1)) = p(x_i(n)|x_i(n - 1)) \equiv p_{n|n-1}(x_i(n)|x_i(n - 1))$.

With the arrival of a new measurement $z_i(n)$, the posterior probability density function is updated via Bayes' rule:

$$\text{(update)} \quad p\big(x_i(n)\big|\mathbf{z}_i(1:n)\big) = \frac{p_{z|x}(\mathbf{z}_i(n)|x_i(n))p\big(x_i(n)\big|\mathbf{z}_i(1:n-1)\big)}{p(\mathbf{z}_i(n)|z_i(1:n-1))} \tag{2}$$

These last two equations form the basis for the optimal Bayesian solution, requiring knowledge of $p_{n|n-1}(x_i(n)|x_i(n - 1))$ (the system model or dynamic equation) and $p(\mathbf{z}_i(n)|x_i(n)) \equiv p_{z|x}(\mathbf{z}_i(n)|x_i(n))$ (the observation or measurement process) and a way of computing the intervening integrals in equation (1).

The knowledge of the probabilities $p(x_i(n)|z_i(1: n))$ permits to obtain an estimation of $x_i(n)$. For example, a well-known criterion is to minimize the mean square position error, which is solved by computing the conditional expectation of the position given the available information, i.e.:

$$\text{(filtering)} \quad E[x_i(n)|\mathbf{z}_i(1:n)] = \int p\big(x_i(n)\big|\mathbf{z}_i(1:n)\big) \, x_i(n)dx_i(n) \tag{3}$$

This algorithm is applied with $n$ being the running index from 0 to N, which can be denoted as a forward recursion.

However, the drawbacks of this algorithm (prediction-update-filtering) in the context of dense point tracking are the following:

- for a given dynamic model $p_{n|n-1}(x_i(n)|x_i(n - 1))$, the a-posteriori probability density functions $p(x_i(n)|z_i(1:n))$ have to be computed for every possible location $x_i(n)$, which in the worst case counts P different values, even when at first $p_{n|n-1}(x_i(n)|x_i(n — 1))$ counts a small number of non-zero values for a given $x_i(n - 1)$;
- for every pixel $i$, one needs to store and propagate (for predicting, updating and finally filtering) those values $p(x_i(n)|z_i(1: n))$, requiring a priori a total worst case memory in the order of $P^2$;
- integrals in equations (1) and (3) have to be computed P times corresponding to each pixel each of which can be computationally expensive given $p(x_i(n)|z_i(1: n))$ may cunt $\sim P$ values.

*5.2 Equivalent algorithm according to the disclosure*

The inventors have proposed a new formulation of this algorithm, based on the following backward recursion, issued from Kolmogorov's backward equations, as defined by Bernt Øksendal in "Stochastic Differential Equations: An Introduction with Applications" (Springer, Sep 22, 2010):

$$p\big(\pmb{x}_i(n)\big|\pmb{x}_i(k),\mathbf{z}_i(k+1\!:\!n)\big)$$

$$= \int p\big(\pmb{x}_i(k+1)\big|\pmb{x}_i(k),\mathbf{z}_i(k+1\!:\!n)\big)\,p\big(\pmb{x}_i(n)\big|\pmb{x}_i(k+1),\mathbf{z}_i(k+2\!:\!n)\big)d\pmb{x}_i(k+1) \qquad (4)$$

where $n$ is fixed and the varying index is $k$: $n$ - 1 ... 0, which runs in the backward direction.

We consider again that all P pixels of an initial image $I_0$ are indexed with index $i$: 0 ... $P$ - 1 , and $x_i(n) = (x_i(n),y_i(n))$ the 2D position at instant $n$ of the $i$ - $th$ pixel of the initial image $I_0$.

For every pixel with initial position $x_i(0) = (x_i(0),y_i(0))$, we seek to estimate its position $\pmb{x}_i(n)$, or a function of its position $f(x_i(n))$, in at least one reference frame $In$ (for $n$ fixed or for all $n$: 1 ... N, depending on the application).

For ease of understanding, let's consider the identical function, i.e. $f(x_i(n)) = x_i(n)$.

From equation (4), it can be shown that:

$$p\big(\pmb{x}_i(n)\big|\pmb{x}_i(k),\mathbf{z}_i(k+1\!:\!n)\big)$$

$$= \int h^i_{k,k+1}\big(\pmb{x}_i(k+1)\big)\,p\big(\pmb{x}_i(n)\big|\pmb{x}_i(k+1),\mathbf{z}_i(k+2\!:\!n)\big)d\pmb{x}_i(k+1) \qquad (5)$$

where we have defined the function:

$$h^i_{k,k+1}\big(\pmb{x}_i(k+1)\big) \equiv h^i_{k,k+1}\big(\pmb{x}_i(k+1);\pmb{x}_i(k),\mathbf{z}_i(k+1)\big) =$$

$$\frac{p_{z|x}\big(\mathbf{z}_i(k+1)\big|\pmb{x}_i(k+1)\big)p_{k+1|k}\big(\pmb{x}_i(k+1)\big|\pmb{x}_i(k)\big)}{p\big(\mathbf{z}_i(k+1)\big|\pmb{x}_i(k)\big)} \qquad (6)$$

Computing $E[x_i(n)|x_i(k),z_i(k+1\!:\!n)]$ then reduces to:

$$E[\pmb{x}_i(n)|\pmb{x}_i(k),\mathbf{z}_i(k+1\!:\!n)] = \int p\big(\pmb{x}_i(n)\big|\pmb{x}_i(k),\mathbf{z}_i(k+1\!:\!n)\big)\,\pmb{x}_i(n)d\pmb{x}_i(n)$$

$$= \int \left(\int h^i_{k,k+1}\big(\pmb{x}_i(k+1)\big)\,p\big(\pmb{x}_i(n)\big|\pmb{x}_i(k+1),\mathbf{z}_i(k+2\!:\!n)\big)d\pmb{x}_i(k\right.$$

$$\left. +1)\right)\pmb{x}_i(n)d\pmb{x}_i(n) \qquad (7)$$

$$= \int h^i_{k,k+1}\big(\pmb{x}_i(k+1)\big)E[\pmb{x}_i(n)|\pmb{x}_i(k+1),\mathbf{z}_i(k+2\!:\!n)]\,d\pmb{x}_i(k+1)$$

The advantages of an algorithm derived from these equations, in the context of dense point tracking are the following:

- for a given dynamic model $p_{k+1|k}(x_i(k+1)|x_i(k))$ and observation model $p_{z|x}(zi(k+1)|x_i(k+1))$, we only need to compute $h^i_{k,k+1}\big(\pmb{x}_i(k+1)\big)$ for those $x_i(k+1)$ where $p_{k+1|k}(x_i(k+1)|x_i(k))$ is not null given $x_i(k)$. The latter

transition probabilities count indeed a number of non-zero values $<< P$;
- one needs to store and propagate $E[x_i(n)|x_i(k + 1), z_i(k + 2: n)]$, which specified for each pixel $i$ at image $I_{k+1}$, needs a memory in the order of $P$;
- integral in the equation (7) has to be computed P times corresponding to each pixel, however at each time it involves only a small number of values $h_{k,k+1}^i\big(x_i(k + 1)\big) \neq 0.$

Such formulation of an equivalent algorithm can be used to define a backward Bayesian algorithm according to the disclosure, used for example for efficient dense point tracking.

*5.3 Examples of embodiments*

**Figure 4** depicts the main steps of a method for estimating, for a set of pixels defined in an initial frame $I_0$, a function of the positions of the set of pixels in a reference frame $I_n$.
As already mentioned, the set of pixels could comprise all the pixels of the initial frame $I_0$, or only a part of the initial frame $I_0$.
The initial frame $I_0$ and the reference frame In belong to a same sequence of images $\{I_m\}$, and could be separated by at least one frame in the sequence. The initial frame $I_0$ and the reference frame In are arbitrarily distant in time, with the reference frame In following the initial frame $I_0$ in the sequence.
According to this embodiment, the method implements at least one iteration of the following steps, for a current frame of the sequence:

- obtaining (41) a matrix $\mathbf{P}_{k,k+1}$ representing, for each pixel of a previous frame $I_k$, a probability of the pixel to be at different positions in the current frame $I_{k+1}$, the previous frame $I_k$ preceding the current frame $I_{k+1}$ in the sequence;
- determining (42) a vector $\hat{E}_{k,n}$ of function of positions of the set of pixels in the previous frame $I_k$, by multiplying said matrix $\mathbf{P}_{k,k+1}$ with a vector $\hat{E}_{k+1,n}$ of function of positions of the set of pixels in the current frame $I_{k+1}$;
- considering the previous frame as the current frame for the next iteration, if any;

During the first iteration, the current frame is the reference frame In and the previous frame is a frame preceding the reference frame In in the sequence, denoted for example as $I_{n-1}$.
A first matrix $\mathbf{P}_{n-1,n}$ and a first vector $\hat{E}_{n-1,n}$ are thus determined. To do so, the initial vector $\hat{E}_{n,n}$ is, for example, previously initialized to the image grid positions. Each coefficient of the first vector $\hat{E}_{n-1,n}$ defines an estimation of a function of the position of a pixel of the previous frame $I_{n-1}$.
Then the previous frame $I_{n-1}$ is considered as the current frame for the next iteration, if any. Such iterations could run until the initial frame becomes the previous frame. Each coefficient of the vector $\hat{E}_{0,n}$ then defines an estimation of a function of the position of a pixel of the set of pixels of the initial frame $I_0$.
According to this embodiment, said matrix is determined by using information from at least one of:

- a system model between the previous frame $I_k$ and the current frame $I_{k+1}$, and
- observations of the function of positions of the set of pixels in at least the current frame $I_{k+1}$ (and, for the first iteration, in at least the reference frame).

Such matrix could be computed "on-line", or could be previously determined and received by a device implementing the estimation algorithm.
Such an iterative algorithm, implementing iterations on the current frame $I_k$, with $k$ varying from $n$ - 1 to 0, could be used to estimate the position, or a function of the position, at instant $n$, of every pixel of the set of pixels initially defined in the initial frame $I_0$, following a backward strategy.
According to another embodiment, it is possible to apply the above-mentioned iterative algorithm in order to estimate the motion vectors of every pixel of the set of pixels of every frame of a video sequence, for example, compared to the reference frame $I_n$. To do so, each output $\hat{E}_{k,n}$, for $k$: $n$ - 1, ... ,0, could be stored as a dense motion field or correspondence field that assigns each pixel of the set of pixel of a frame $I_k$ its location in the reference frame $I_n$.
According to another embodiment, it is possible to apply the above-mentioned iterative algorithm in order to estimate the trajectories of every pixel of the set of pixels of the initial frame $I_0$ up to instant $n$, for example. To do so, iterations on the reference frame $I_n$, with $n$ varying from 1 to N, could be used to obtain a temporal sequence of positions of $x_i(n)$ for every pixel $i$ of the set of pixels initially defined in the initial frame $I_0$, i.e. the trajectory of such pixel, defined in the vectors $\hat{E}_{0,1}, \hat{E}_{0,2}, \hat{E}_{0,3}\ \hat{E}_{0,4,...}.$
An example of estimation of the position, at instant n, of every pixel of the set of pixels initially defined in the initial frame $I_0$, following a backward strategy, is described here below in reference to **Figure 5.**

Let's consider a discrete set $G = \{(p_j, q_j)\}$ of possible positions for $x_i(n)$, with $(p_j, q_j)$ the 2D position corresponding to the $j$ - $th$ image grid location. Say we have the previous computed value $E[x_i(n)|x_i(k + 1), z_i(k + 2: n)]$ for every $x_i(k + 1) \in G$, i.e. an optimal prediction of $\boldsymbol{x}_i(n)$ as a function of a departing grid position $\boldsymbol{x}_i(k + 1)$ and the measurements.
Let us write this function as the vector:

$$\widehat{\boldsymbol{E}}_{k+1,n} = \left[E_{k+1,n}^{0}, E_{k+1,n}^{1}, \dots, E_{k+1,n}^{P-1}\right]^{\mathrm{T}}$$

where $E_{k+1,n}^{i} = E\left[\boldsymbol{x}_i(n)|\boldsymbol{x}_i(k + 1) = (p_i, q_i), \mathbf{z}_i(k + 2: n)\right]$, i.e. the estimated position at instant n of the $i$ - $th$ pixel of $I_{k+1}$.

Then, applying equation (7) and approximating the integral as a sum for each discrete image grid location we get:

$$\widehat{\boldsymbol{E}}_{k,n} = \mathbf{P}_{k,k+1}\widehat{\boldsymbol{E}}_{k+1,n} \qquad (8)$$

where from equation (6):

$$\left[\mathbf{P}_{k,k+1}\right]_{ij} = h_{k,k+1}^{i}(p_j, q_j)$$

with $h_{k,k+1}^{i}(p_j, q_j) \propto p_{k+1|k}\left((p_j, q_j)\Big|(p_i, q_i)\right)p_{z|x}\left(\mathbf{z}_i(k + 1)\Big|(p_j, q_j)\right),$, which is normalized in probability

to guarantee that $\sum_s h_{k,k+1}^{i}(p_j, q_j) = 1$.

Consequently, $\mathbf{P}_{k,k+1} \in \mathbb{R}^{P \times P}$ is a sparse right stochastic matrix (each row sums up to 1).
Note that from equation (8) we obtain an estimation of $E[\boldsymbol{x}_i(n)|\boldsymbol{x}_i(k), z_i(k + 1: n)]$ for every $i$, and iterating with $k$: $n$ - 1 ... 0, we finally get $E[\boldsymbol{x}_i(n)|\boldsymbol{x}_i(0), z_i(1: n)]$.
The proposed algorithm according to this example thus comprises three stages for a current frame:

    1. Compute the sparse matrix $\mathbf{P}_{k,k+1}$ according to the dynamic and observation models,
    2. Compute the matrix-vector product $\mathrm{P}_{k,k+1}\hat{E}_{k+1,n}$,
    3. Store the result as $\hat{E}_{k,n}$.

As illustrated in Figure 5, at initialization 51, the variable $k$ and a vector $\hat{E}_{n,n}$ of function of positions of the set of pixels in the reference frame $In$ are respectively initialized to the value $n$ ($k = n$) and to the image grid positions. According to this example, the algorithm starts from the reference frame, which could be the last frame of the sequence, and initialize a vector of positions for each pixel according to their position in the image grid.
During the first iteration, the variable $k$ is set (52) to $k$ - 1, i.e. $k = n$ - 1. The current frame is $I_{k+1}$ = In and the previous frame is $I_k = I_{n-1}$. A test (53) is implemented to determine if the previous frame is the initial frame $I_0$.
If the previous frame is the initial frame $I_0$, this is the end of the iterative algorithm.
If the previous frame is not the initial frame $I_0$, the sparse matrix $\mathbf{P}_{k,k+1} = \mathbf{P}_{n-1,n}$ is computed (24).
Then, the matrix-vector product $\mathbf{P}_{k,k+1}\hat{E}_{k+1,n} = \mathbf{P}_{n-1,n}\hat{E}_{n,n}$ is computed (55), and the result is stored (56) in the vector $\hat{E}_{k,n} = \hat{E}_{n-1,n}$. This is the end of the first iteration.
We go back to step 52, where the variable $k$ is set to $k$ - 1, and iterate the test (53), the computation (54) of the sparse matrix $\mathbf{P}_{k,k+1}$, the computation (55) of the matrix-vector product $\mathbf{P}_{k,k+1}\hat{E}_{k+1,n}$, and the storing of the result (56) in the vector $\hat{E}_{k,n}$, and so on.
The proposed algorithm runs from $k = n$ - 1 to $k = 0$. In other words, the previous frame is considered as the current frame for the next iteration, until the previous frame is the initial frame $I_0$.
During step 54, the sparse matrix $\mathbf{P}_{k,k+1}$ could be determined using information (541) from at least one of:

-    a system model between the previous frame $I_k$ and the current frame $I_{k+1}$, and
-    observations of the function of positions of the set of pixels in at least the current frame $I_{k+1}$.

For example, for a previous frame $I_k$, a motion map is computed between the previous frame $I_k$ and the current frame $I_{k+1}$. For each pixel of the set of pixels of the previous frame $I_k$, a measurement of its position in the current frame $I_{k+1}$ is obtained, and a probability model for these measurements is derived as a function of the true position. Using these information (motion map and/or measurements), the sparse matrix $\mathbf{P}_{k,k+1}$ could be determined, where each row is defined as in equation (8). The product of this matrix with the current vector of positions $\hat{E}_{k+1,n}$ can then be computed and the result be stored as a new vector of positions of each pixel of such previous frame $\hat{E}_{k,n}$. These operations are repeated after setting the previous frame as the current frame.

According to a first example, the sparse matrix $\mathbf{P}_{k,k+1}$ can be determined by considering a known a priori dynamic system model and/or observation model. In the case when $p_{k+1|k}(x_i(k + 1)|x_i(k))$ is known as given information (e.g. a physical model of the tracked point with some stochastic uncertainty component), as well as the distribution of measurements $p_{z|x}(\mathbf{z}_i(k + 1)|x_i(k + 1))$ are also given, each row of $\mathbf{P}_{k,k+1}$ is computed using the numerator of equation (6) for every possible $x_i(k + 1)$ in the discrete set of image grid locations, and then it is normalized in probability. These values are computed only when $p_{k+1|k}(x_i(k + 1)|x_i(k)) > 0$. The product $\mathbf{P}_{k,k+1}\hat{E}_{k+1,n}$ is performed row by row, only for the non-zero coefficients of $\mathbf{P}_{k,k+1}$, avoiding to apply the whole matrix-vector product. Sparse matrix methods can be applied for this sake.

According to a second example, the sparse matrix $\mathbf{P}_{k,k+1}$ can be determined by considering an unknown a priori dynamic system model. When the physical or dynamic model of the tracked point is not known, it is estimated by application of any two-frame optical flow or motion estimation method, that estimates for example the velocity field $v_{k,k+1}(x)$ for every $\mathbf{x} \in G$ and that gives an estimate of the position $\hat{x}_i(k+1)$ in $I_{k+1}$ of a given starting point $x_i(k)$ in $I_k$. The uncertainties of this estimation can be modeled as a noise term (e.g. a Gaussian additive noise) and expressed as a probability distribution $p_{k+1|k}(x_i(k + 1)|x_i(k))$ (Gaussian distribution with mean $x_i(k) + \mathbf{v}(\mathbf{x}_i(k))$ and its variance).

For example, the system model is an estimation of a dense motion field between the previous frame $I_k$ and the current frame $I_{k+1}$, and the observations are used to determine a probability model of the function of positions of the set of pixels. The system model and/or the observations are obtained by analyzing the sequence of frame $\{I_m\}$.

Regarding the observations, it should be noted that they are not limited to an observation of the position of a pixel, but concern function of positions of the set of pixels. In other words, the observation process is not limited to measuring directly the position of the pixel, but it can represent any observable information which is implicitly or explicitly a function of the point position, as for example: color values, color histograms, border information, texture information, color gradients etc.

For example, given a pixel color observation $z_i(k)$, we can model $p_{z|x}(z_i(k)|x_i(k))$ in the form of a likelihood, i.e. as a function of $x_i(k)$. This distribution may model how well the color measurement at a given position describes the tracked point in terms of any image feature (e.g. color matching). In other words, a pixel observation $z_i(k)$ could be a measurement of the position of a pixel $i$, a function of the position of the pixel $i$ (e.g.: color), a function of the function of position $f(x_i(k))$.

As already mentioned, Figure 5 illustrates an example of estimation of the position, in the reference frame $I_n$, of pixels of the set of pixels initially defined in the initial frame $I_0$. In this example, the function of the position is therefore the identical function.

However, as already mentioned, it is also possible to estimate other functions of the position of pixels. In other words, the quantity we want to estimate can be extended to any function f of the position: $f(x_i(k))$ can be a spatial location, or an arbitrary function of it.

The vector $\hat{E}_{k+1,n}$ of function of positions of the set of pixels in the current frame $I_{k+1}$ can in this case be defined by:

$$\widehat{E}_{k+1,n}$$
$$= \left[ E[f(\boldsymbol{x}_0(n))|\boldsymbol{x}_0(k + 1) = (p_0, q_0), \mathbf{z}_0(k + 2 : n)], \ldots, E[f(\boldsymbol{x}_P(n))|\boldsymbol{x}_P(k + 1) = (p_P, q_P), \mathbf{z}_P(k + 2 : n)] \right]^{\mathrm{T}}$$

with

$$E\left[f\left(\boldsymbol{x}_i(n)\right)\middle|\boldsymbol{x}_i(k), \mathbf{z}_i(k + 1 : n)\right] = \int p\left(f\left(\boldsymbol{x}_i(n)\right)\middle|\boldsymbol{x}_i(k), \mathbf{z}_i(k + 1 : n)\right) f(\boldsymbol{x}_i(n)) d\boldsymbol{x}_i(n)$$

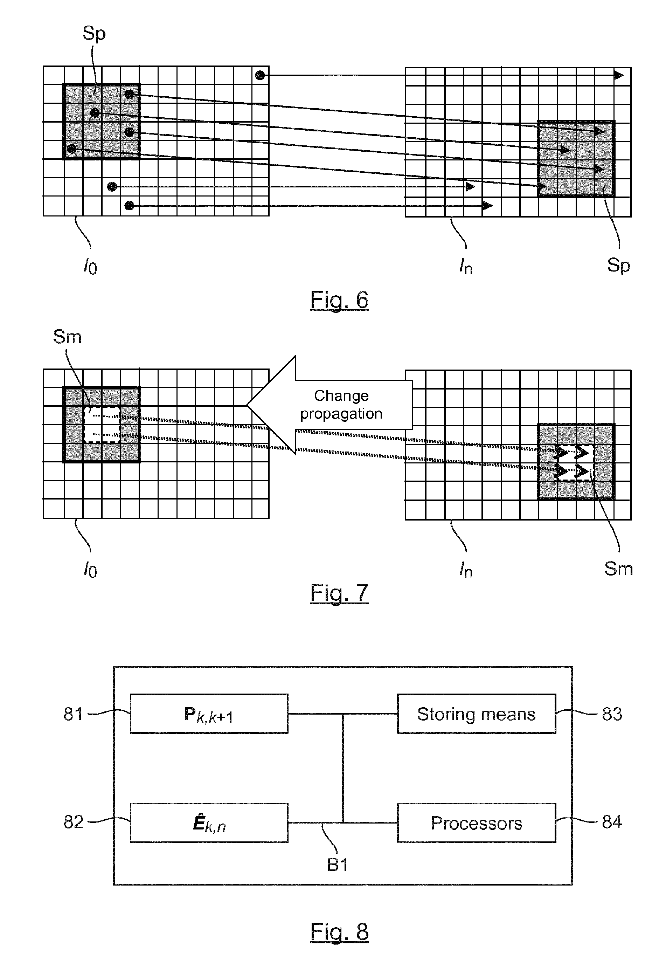

**Figures 6** and **7** illustrate different applications of the invention according to different embodiments. These are non-limitative examples of applications.

Figure 6 illustrates an example of dense pixel correspondences estimation according to an embodiment. For example, if we consider a set of pixels Sp defined in an initial frame $I_0$, it is possible according to this embodiment to determine an estimation of a function of the positions of the set of pixels (like their positions) in the reference frame $I_n$.

Figure 7 illustrates another application of the disclosure, for the propagation of information available in the reference frame $I_n$ to the rest of the sequence. For example, if the reference frame $I_n$ is modified to change the color of some pixels Sm of the set of pixels, there is an automatic modification of the previous frames, and of the initial frame $I_0$, by back propagating the modified pixels. This embodiment is well suited for estimating with high precision a dense field of correspondence vectors for each frame of the sequence, that point to the reference frame, from which information is pulled. This embodiment could be implemented for example for the propagation of color, disparity, a segmentation label map, any type of mask, illumination variations, an inserted graphic element (e.g. a logo), etc, available in the reference frame.

Another application of at least one embodiment of the invention is the multi-frame video editing. Being able to link each image to a reference image permits to apply changes in such key-frame and instantaneously apply the modification to the rest of the sequence. A user can visualize this changes on-the-fly and be conscious of the effects of his intervention for the whole sequence / shot.

Another application of at least one embodiment of the invention is the dense trajectory-based motion layer segmentation. The disclosure permits to compute point trajectories more accurately, which then may feed a trajectory clustering method aimed at segmenting the objects in the scene according to their distinctive motion. This has a direct application in foreground/background segmentation, cleanplate extraction, object replacement, depth ordering, occlusion detection etc.

**Figure 8** illustrates an example of a device for estimating, for a set of pixels defined in an initial frame $I_0$, a function of the positions of the set of pixels in a reference frame $I_n$, according to an embodiment of the invention.

Such an estimator device comprises at least:

- a module 81 for obtaining a matrix $\mathbf{P}_{k,k+1}$ representing, for each pixel of a previous frame $I_k$, a probability of the pixel to be at different positions in the current frame $I_{k+1}$, the previous frame $I_k$ preceding the current frame $I_{k+1}$ in the sequence;
- a module 82 for determining a vector $\hat{E}_{k,n}$ of function of positions of the set of pixels in the previous frame $I_k$, by multiplying said matrix $\mathbf{P}_{k,k+1}$ with a vector $\hat{E}_{k+1,n}$ of function of positions of the set of pixels in the current frame $I_{k+1}$;
- storing means 83, such as a volatile memory;
- one or more processors 84 for executing the applications and programs stored in a nonvolatile memory of the device;
- an internal bus B1 to connect the various modules and all means well known to the skilled in the art for performing the generic estimator device functionalities.

It should also be noted that the algorithm according to the disclosure could be implemented in a GPU. For example, from equation (8), for a given vector $\hat{E}_{k+1,n}$, each row of the matrix $\mathbf{P}_{k,k+1}$ can be computed independently and it corresponds to a pixel in the previous image $I_k$. The product $\mathbf{P}_{k,k+1} \hat{E}_{k+1,n}$ could be computed for each row in parallel. The output values could be used to update $\hat{E}_{k,n}$, and they could be stored independently of the others.

The flowchart and/or block diagrams in the Figures illustrate the configuration, operation and functionality of possible implementations of systems, methods and computer program products according to various embodiments of the present disclosure. In this regard, each block in the flowchart or block diagrams may represent a module, segment, or portion of code, which comprises one or more executable instructions for implementing the specified logical function(s). It should also be noted that, in some alternative implementations, the functions noted in the block may occur out of the order noted in the figures. For example, two blocks shown in succession may, in fact, be executed substantially concurrently, or the blocks may sometimes be executed in the reverse order, or blocks may be executed in an alternative order, depending upon the functionality involved. It will also be noted that each block of the block diagrams and/or flowchart illustration, and combinations of the blocks in the block diagrams and/or flowchart illustration, can be implemented by special purpose hardware-based systems that perform the specified functions or acts, or combinations of special purpose hardware and computer instructions. While not explicitly described, the present embodiments may be employed in any combination or sub-combination.

As will be appreciated by one skilled in the art, aspects of the present principles can be embodied as a system, method, computer program or computer readable medium. Accordingly, aspects of the present principles can take the form of an entirely hardware embodiment, an entirely software embodiment (including firmware, resident software, micro-code, and so forth), or an embodiment combining software and hardware aspects that can all generally be referred to herein as a "circuit," "module", or "system." Furthermore, aspects of the present principles can take the form of a computer readable storage medium. Any combination of one or more computer readable storage medium(s) may be utilized.

A computer readable storage medium can take the form of a computer readable program product embodied in one or more computer readable medium(s) and having computer readable program code embodied thereon that is executable by a computer. A computer readable storage medium as used herein is considered a non-transitory storage medium given the inherent capability to store the information therein as well as the inherent capability to provide retrieval of the information therefrom. A computer readable storage medium can be, for example, but is not limited to, an electronic, magnetic, optical, electromagnetic, infrared, or semiconductor system, apparatus, or device, or any suitable combination of the foregoing. It is to be appreciated that the following, while providing more specific examples of computer readable storage mediums to which the present principles can be applied, is merely an illustrative and not exhaustive listing as is readily appreciated by one of ordinary skill in the art: a portable computer disc, a hard disc, a random access memory (RAM), a read-only memory (ROM), an erasable programmable read-only memory (EPROM or Flash memory), a portable compact disc read-only memory (CD-ROM), an optical storage device, a magnetic storage device, or any suitable combination of the foregoing.

**Claims**

1.  A method for estimating, for a set of pixels defined in an initial frame $I_0$, a function of the positions of the set of pixels in a reference frame $I_n$,
    the initial frame $I_0$ and the reference frame In belonging to a sequence of at least two successive frames,
    wherein said method comprises at least one iteration of the following steps, for a current frame of the sequence:

    - obtaining (41) a matrix $\mathbf{P}_{k,k+1}$ representing, for each pixel of a previous frame $I_k$, a probability of the pixel to be at different positions in the current frame $I_{k+1}$, the previous frame $I_k$ preceding the current frame $I_{k+1}$ in the sequence;
    - determining (42) a vector $\hat{E}_{k,n}$ of function of positions of the set of pixels in the previous frame $I_k$, by multiplying said matrix $\mathbf{P}_{k,k+1}$ with a vector $\hat{E}_{k+1,n}$ of function of positions of the set of pixels in the current frame $I_{k+1}$;
    - considering the previous frame as the current frame for the next iteration, if any;

    wherein, for the first iteration, the current frame is the reference frame In and the previous frame is a frame preceding the reference frame In in the sequence;
    and wherein said matrix is determined by using information from at least one of a system model between the previous frame and the current frame, and of observations of the function of positions of the set of pixels in at least the current frame.

2.  The method according to claim 1, wherein the function of the positions of the set of pixels belongs to the group comprising:

    - a spatial location of each pixel of the set of pixels,
    - a color of each pixel of the set of pixels,
    - a velocity of each pixel of the set of pixels,
    - a texture of each pixel of the set of pixels.

3.  The method according to any one of claims 1 or 2, wherein the system model belongs to the group comprising:

    - an estimation of a motion field between the previous frame and the current frame,
    - a constant velocity model,
    - a constant acceleration model,
    - a physic-related motion model.

4.  The method according to any one of claims 1 to 3, wherein said method comprises determining a probability model of the function of positions of the set of pixels from the observations.

5.  The method according to any one of claims 1 to 4, wherein the set of pixels in the initial frame comprises all the pixels of the initial frame.

6.  The method according to any one of claims 1 to 5, wherein the first iteration comprises initializing a vector of function of positions of the set of pixels in the reference frame according to the positions of the set of pixels in the reference frame grid.

7.  The method according to any one of claims 1 to 6, wherein the method comprises storing the vector $\hat{E}_{k,n}$ of function of positions of the set of pixels in the previous frame, one determined.

8. The method according to any one of claims 1 to 7, wherein the method comprises estimating trajectories of each pixel of the set of pixels between the initial frame $I_0$ and a target frame $I_N$, by implementing the iterations of claim 1 for different reference frames $I_n$, with $1 \leq n \leq N..$

9. The method according to any one of claims 1 to 8, wherein the matrix $\mathbf{P}_{k,k+1}$ is a sparse right stochastic matrix.

10. The method according to any one of claims 1 to 9, wherein the matrix $\mathbf{P}_{k,k+1}$ is defined by:

$$\left[\mathbf{P}_{k,k+1}\right]_{ij} = h^i_{k,k+1}(p_j, q_j)$$

with :

- $h^i_{k,k+1}(p_j, q_j) \propto p_{k+1|k}\left((p_j, q_j)\middle|(p_i, q_i)\right) p_{z|x}\left(\mathbf{z}_i(k+1)\middle|(p_j, q_j)\right)$,
- $(p_j, q_j)$ a possible position, in the current frame $I_{k+1}$, of a pixel $x_i(k)$ of the set of pixels belonging to the previous frame $I_k$,
- $z_i(k+1)$ an observation, in the current frame $I_{k+1}$, of the function of the pixel $x_i(k+1)$ of the set of pixels belonging to the current frame $I_{k+1}$.

11. The method according to any one of claims 1 to 10, wherein the vector of function of positions of the set of pixels in the previous frame $\hat{E}_{k,n}$ is determined by multiplying said matrix $\mathbf{P}_{k,k+1}$ with the vector of function of positions of the set of pixels in the current frame $\hat{E}_{k+1,n}$ such as:

$$\hat{E}_{k,n} = \mathbf{P}_{k,k+1}\hat{E}_{k+1,n}$$

with:

$$\hat{E}_{k+1,n}$$
$$= \left[E[f(\mathbf{x}_0(n))|\mathbf{x}_0(k+1) = (p_0, q_0), \mathbf{z}_0(k+2:n)], \dots, E[f(\mathbf{x}_P(n))|\mathbf{x}_P(k+1) = (p_P, q_P), \mathbf{z}_P(k+2:n)]\right]^{\mathrm{T}}$$

$$E[f(\mathbf{x}_i(n))|\mathbf{x}_i(k), \mathbf{z}_i(k+1:n)] = \int p\left(f(\mathbf{x}_i(n))\middle|\mathbf{x}_i(k), \mathbf{z}_i(k+1:n)\right) f(\mathbf{x}_i(n)) d\mathbf{x}_i(n)$$

$f(x_i(n))$ the function of the position of the pixel $\mathbf{x}_i(n)$ of the set of pixels belonging to the previous frame $I_k$.

12. A device for estimating, for a set of pixels defined in an initial frame $I_0$, a function of the positions of the set of pixels in a reference frame $I_n$,
the initial frame $I_0$ and the reference frame In belonging to a sequence of at least two successive frames,
wherein said device comprises the following modules, activated in at least one iteration, for a current frame of the sequence:

- a module (81) for obtaining a matrix $\mathbf{P}_{k,k+1}$ representing, for each pixel of a previous frame $I_k$, a probability of the pixel to be at different positions in the current frame $I_{k+1}$, the previous frame $I_k$ preceding the current frame $I_{k+1}$ in the sequence;
- a module (82) for determining a vector $\hat{E}_{k,n}$ of function of positions of the set of pixels in the previous frame $I_k$, by multiplying said matrix $\mathbf{P}_{k,k+1}$ with a vector $\hat{E}_{k+1,n}$ of function of positions of the set of pixels in the current frame $I_{k+1}$;
- the previous frame being considered as the current frame for the next iteration, if any;

wherein, for the first iteration, the current frame is the reference frame In and the previous frame is a frame preceding the reference frame In in the sequence;
and wherein said matrix is determined by using information from at least one of a system model between the previous frame and the current frame, and of observations of the function of positions of the set of pixels in at least the current frame.

13. A computer program product downloadable from a communication network and/or recorded on a medium readable by computer and/or executable by a processor comprising software code adapted to perform a method for estimating, for a set of pixels defined in an initial frame $I_0$, a function of the positions of the set of pixels in a reference frame $I_n$, the initial frame $I_0$ and the reference frame $I_n$ belonging to a sequence of at least two successive frames, wherein the software code is adapted to perform at least one iteration of the following steps, for a current frame of the sequence:

- obtaining a matrix $\mathbf{P}_{k,k+1}$ representing, for each pixel of a previous frame $I_k$, a probability of the pixel to be at different positions in the current frame $I_{k+1}$, the previous frame $I_k$ preceding the current frame $I_{k+1}$ in the sequence;
- determining a vector $\hat{E}_{k,n}$ of function of positions of the set of pixels in the previous frame $I_k$, by multiplying said matrix $\mathbf{P}_{k,k+1}$ with a vector $\hat{E}_{k+1,n}$ of function of positions of the set of pixels in the current frame $I_{k+1}$;
- considering the previous frame as the current frame for the next iteration, if any;

wherein, for the first iteration, the current frame is the reference frame In and the previous frame is a frame preceding the reference frame In in the sequence;
and wherein said matrix is determined by using information from at least one of a system model between the previous frame and the current frame, and of observations of the function of positions of the set of pixels in at least the current frame.

14. A non-transitory computer-readable medium comprising a computer program product recorded thereon and capable of being run by a processor, including program code instructions for implementing the steps of the method for estimating, for a set of pixels defined in an initial frame $I_0$, a function of the positions of the set of pixels in a reference frame $I_n$, according to at least one of claims 1 to 11.

$x_i(n)$ → | **Real System** | → $x_i(n+1)$

Fig. 1

$\hat{x}_i(n)$ → | **System Model** | → $\hat{x}_i(n+1)$

Fig. 2

$\hat{x}_i(n)$ → | **System Model** | → $\hat{x}_i(n+1)$ → | Optimal Tracker | → $\hat{x}_i^{opt}(n+1)$

$x_i(n)$ → | **Observation** | → $z_i(n)$

Fig. 3

$I_{0,n}$

System model / observations

$\mathbf{P}_{k,k+1}$ — 41

$\hat{E}_{k,n}$ — 42

$f(x_i(n))$

Fig. 4

$I_{0,n}$

Initialization $k = n$ — 51

$k = k - 1$ — 52

$k > 0$ — 53 → END

Construct $\mathbf{P}_{k,k+1}$ — 54

$\{I_m\}$ — 541

Estimate dense motion field between $I_k$ and $I_{k+1}$

Compute observation and observation probabilities/ likelihoods

55

$\hat{E}_{k+1,n}$ — 56

Fig. 5

Fig. 6

Fig. 7

Fig. 8

Europäisches
Patentamt
European
Patent Office
Office européen
des brevets

# EUROPEAN SEARCH REPORT

Application Number

EP 14 30 6743

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | LEE-LING S ONG ET AL: "Tracking of cell population from time lapse and end point confocal microscopy images with multiple hypothesis Kalman smoothing filters", COMPUTER VISION AND PATTERN RECOGNITION WORKSHOPS (CVPRW), 2010 IEEE COMPUTER SOCIETY CONFERENCE ON, IEEE, PISCATAWAY, NJ, USA, 13 June 2010 (2010-06-13), pages 71-78, XP031728630, ISBN: 978-1-4244-7029-7 * page 72 - page 74 * | 1-14 | INV. G06T7/20 |
| A | TOMAS CRIVELLI ET AL: "Robust Optical Flow Integration", IEEE TRANSACTIONS ON IMAGE PROCESSING, vol. 24, no. 1, 8 July 2014 (2014-07-08), pages 484-498, XP055163154, ISSN: 1057-7149, DOI: 10.1109/TIP.2014.2336547 * Chapters II, III and V * | 1-14 | |
| A | ALPER YILMAZ ET AL: "Object tracking", ACM COMPUTING SURVEYS, vol. 38, no. 4, 25 December 2006 (2006-12-25), pages 13-es, XP55053833, ISSN: 0360-0300, DOI: 10.1145/1177352.1177355 * page 20 - page 22 * | 1-14 | TECHNICAL FIELDS SEARCHED (IPC) G06T |

The present search report has been drawn up for all claims

| Place of search | Date of completion of the search | Examiner |
|---|---|---|
| Munich | 22 June 2015 | Rockinger, Oliver |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **J. SHI et al.** Good features to track. *Proc. CVPR,* 1994

- **BERNT ØKSENDAL.** Stochastic Differential Equations: An Introduction with Applications. Springer, 22 September 2010